# EUROPEAN PATENT APPLICATION

(11) **EP 0 980 157 A2**
(43) Date of publication of application: **16.02.2000**
(21) Application number: 99306270.2
(22) Date of filing: 06.08.1999
(51) Int. Cl.: H04H 1/04, H04L 27/26

(54) **Frame synchronisation in a DAB receiver**

(30) Priority: 10.08.1998 JP 22575198
(71) Applicant: SONY CORPORATION, Tokyo (JP)
(72) Inventor: Nomura, Kiyoshi, Shinagawa-ku, Tokyo (JP)
(74) Representative: Ayers, Martyn Lewis Stanley

(57) **Abstract**

A receiver for receiving the digital broadcasting of a signal having a pause period and digital data in every frame comprises a first detector for detecting a start point or an end point of the pause period, a timer of which period is equal to a frame time, and a second detector for detecting a difference between the point of time detected by the first detector and the time of the timer. The offset of a frame signal indicative of the length of time of the digital data is corrected by the output of the second detector.

## Description

The present invention relates generally to a receiver for receiving digital broadcasting such as DAB (Digital Audio Broadcasting) for example.

In Europe, DAB (Digital Audio Broadcasting based on Eureka 147 standards) is practiced as digital audio broadcasting. In DAB, various types of encoding are performed on a plurality pieces of digital data to finally form an OFDM (Orthogonal Frequency Division Multiplex) signal, which is transmitted. It should be noted that a maximum of 64 channels of digital audio data and so on can be broadcasted as digital data at a time.

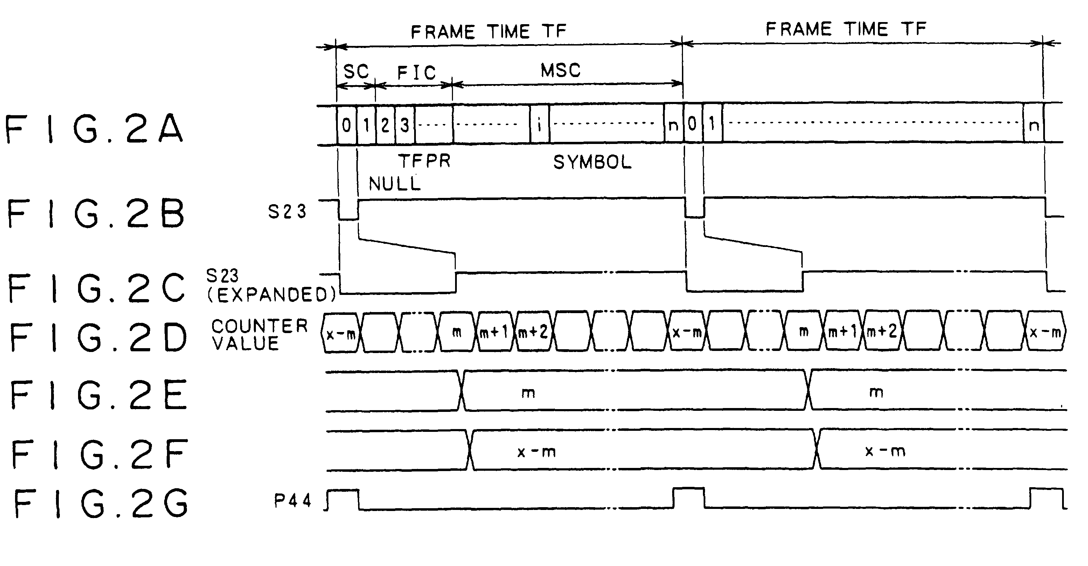

FIG. 2A indicates a configuration of the OFDM signal along time axis. As shown, the OFDM signal is constituted by a plurality of frames, each thereof being constituted by a plurality of symbols. DAB has four transmission modes I through IV. In the transmission mode I, for example, frame time length TF is 96 ms and maximum symbol number n in each frame is 76.

Each frame is divided, on a symbol basis, into a synchronous channel SC, a fast information channel FIC, and a main service channel MSC. In this case, the synchronous channel SC, for use in such processing as frame synchronization and AFC (Automatic Frequency Control) in a receiver, consists of 2 symbols, a first symbol being a null symbol NULL and a second symbol being a symbol TFPR for phase reference. The null symbol NULL in every other frame includes identification information TII (Transmitter Identification Information) for identifying a transmission station. During remained other null symbol NULL periods, nothing is transmitted (including a carrier signal).

The fast information channel FIC provides data associated with the main service channel MSC and has data such as time, date, type, data array, and traffic message control. The main service channel MSC has main data such as digital audio data and various types of digital data.

In the DAB receiver, to demodulate a DAB signal into digital data, an FFT (Fast Fourier Transform) circuit is used in general. In the FFT circuit, control must be provided so that no temporal offset is caused in the window position of FFT processing. Namely, if a temporal offset is found in the window position of FFT processing, the offset must be corrected.

In a generally practiced method of correcting the offset of the window position in FFT processing, the phase reference symbol TFPR is used. In this method, however, offset correction data is generated by processing the phase reference symbol TFPR, so that, if this processing is executed by the DSP (Digital Signal Processor), its load increases considerably.

It is therefore an object of the present invention to simply correct the offset in the window position of FFT processing in a DAB receiver for receiving a broadcast waveform signal based on DAB through cable broadcasting for example.

In carrying out the invention and according to one aspect thereof, there is provided a receiving apparatus for receiving digital broadcasting of a signal having a pause period and digital data in every frame, comprising: a first detector for detecting a start point or an end point of the pause period; a timer having a cycle which is a duration time of the frame; and a second detector for detecting a difference between a time point at which the first detector made the detection and a time indicated by the timer; wherein an offset of a frame signal indicative of a duration of the digital data on the basis of an output of the second detector. Consequently, the DSP need not execute complicated signal processing otherwise required for offset correction.

An embodiment of the invention will now be described, by way of example only, with reference to the accompanying drawings in which:-
FIG. 1 is a block diagram illustrating one embodiment of the invention; and
FIGS. 2A through 2G illustrate signal timings for describing the invention.

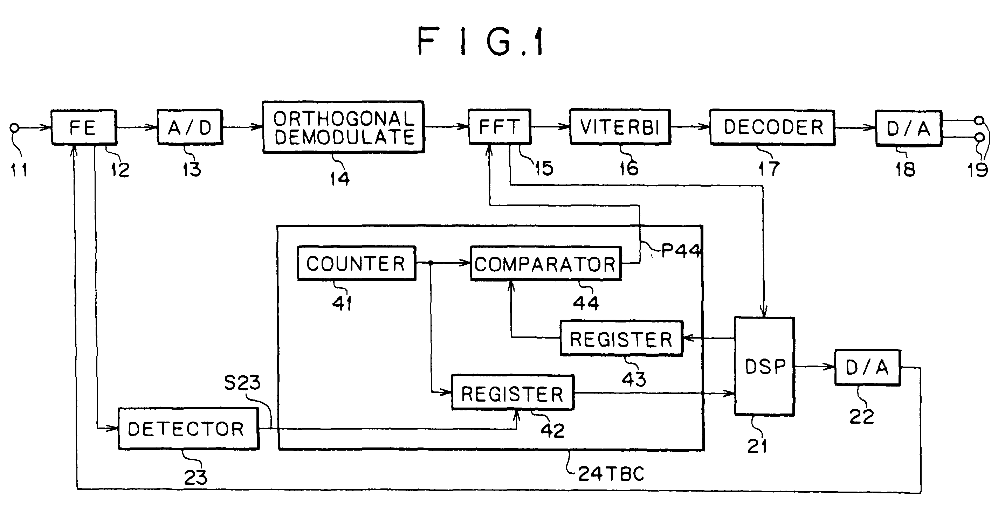

Now, referring to FIG. 1, a DAB broadcast wave signal based on cable broadcasting for example is supplied through a cable, not shown, such as a coaxial cable or an optical cable to an input terminal 11. From the input terminal 11, the signal is then supplied to a front end circuit 12 constituted in a super heterodyne manner to be frequency-converted in an intermediate frequency signal. This intermediate frequency signal is supplied to an A/D (Analog-to-Digital) converter 13 to be converted into a digital signal.

Then, the digital signal is supplied to an orthogonal demodulator 14 to demodulate data of an in-phase component (a real-axis component) and an orthogonal component (an imaginary-axis component). These pieces of data are complex-Fourier-transformed in an FFT circuit 15 to output a frequency component for each symbol. The output is then supplied to a Viterbi decoder 16 to be de-interleaved and error-corrected and, at the same time, program (or a channel) selection is made for selection of the digital audio data of a desired program.

Next, the selected digital audio data is supplied to a decoder 17 for MPEG data decompression. From the decoder 17 is taken the digital audio data of the desired program as decompressed to the original data length. The decompressed digital audio data is supplied to a D/A (Digital-to-Analog) converter 18 to be converted into an analog audio signal, which is supplied to a terminal 19.

Further, a DSP 21 is provided for frequency synchronization. A frequency analysis result of the phase reference symbol TFPR is taken from the FFT circuit 15 to be supplied to the DSP 21. Based on the frequency analysis result, the data for indicating the magnitude of frequency offset is obtained. The obtained data is converted by the D/A converter 22 into an analog voltage, which is supplied to the front end circuit 12 as the control voltage for a local oscillation frequency, thereby correcting the frequency offset of the signal outputted from the front end circuit 12. Namely, an AFC operation is executed.

The intermediate frequency signal outputted from the front end circuit 12 is supplied to a detector 23 having an envelope detector and a waveform shaping circuit to provide a signal S23 which is falling during a first symbol period, namely a null symbol NULL period as shown in FIGS. 2B and 2C for example.

It should be noted that in the case of DAB based on radio waves, the null symbol NULL in every other frame includes the identification information TII for identifying a transmission station. In the present example, however, DAB is based on cable, so that nothing is transmitted in the null symbol NULL period in every frame. Therefore, the signal S23 is falling in the null symbol NULL period of every frame. This indicates that the signal S23 is a signal for detecting the null symbol NULL period. FIGS. 2C and on illustrate the null symbol NULL period of the signal S23 with the time axis expanded.

The detection signal S23 is supplied to a TBC (Time Base Corrector) circuit 24 for frame synchronization. The TBC circuit 24 has a ring counter 41 for a timer, registers 42 and 43, and a comparator 44. Pulses having a certain frequency are inputted in the ring counter 41 as a count input. As shown in FIG. 2D for example, one cycle of the counting provides one frame time TF.

Therefore, the count value of the counter 41 is repeated in a frame period. For example, count value 0 always has a certain offset (a time difference) relative to the start point of that frame in every frame time TF. Namely, in every frame time TF, at the start point of the window position of FFT processing, the count value of the counter 41 is equal to that in every other frame time TF. Therefore, the count value of the counter 41 has reached a certain value (a target value), that point of time is the start point of the window position of FFT processing.

Consequently, as shown in FIG. 2E, when the signal S23 rises, count value m of the counter 41 at the time of this rising is loaded into the register 42. The count value m loaded in the register 42 is supplied to the DSP 21 as the information about the rising point of the signal S23. Then, in the DSP 21, the value (x - m) is calculated, which is loaded into the register 43 of the TBC circuit 24. In this case, the value x is a target value for use when the count value of the counter 41 has no offset. Therefore, the value (x - m) provides a target value for use when there is offset m.

In the TBC circuit 24, the value (x - m) of the register 43 is compared with the count value of the counter 41 by the comparator 44. If there is match between the count value of the counter 41 and the count value (x - m) of the resister 43 as shown in FIG. 2F, a pulse P44 is outputted from the comparator 44. Therefore, because this pulse P44 is obtained for the target value (x - m) when there is an offset, the pulse has a constant time difference regardless of the magnitude of the offset of the count value relative to the start point of the window position of FFT processing. Hence, the pulse P44 is supplied to the FFT circuit 15 in which FFT processing is executed on this pulse.

Thus, according to the above-mentioned DAB receiver, the offset of the window position of FFT processing can be corrected. Especially, in the above-mentioned receiver, the DSP 21 may only convert the value m into the value (x - m). Consequently, the load of the DSP 21 can be remarkably decreased as compared with the case in which the phase reference symbol TFPR is used.

If the DAB broadcast wave signal comes through cable as described above, the quality of the wave signal is always kept in a good condition. Consequently, no countermeasure against such as phasing need be considered, surely correcting the window position of FFT processing also in the above-mentioned configuration.

It should be noted that the conversion from the value m to the value (x - m) may also be executed in the TBC circuit 24. In this case, the DSP 21 need not execute the processing for window position correction. Also, a baseband signal from the front end circuit 12 may be orthogonally demodulated to obtain an in-phase component and an orthogonal component. These components are A/D-converted to be supplied to the FFT circuit 15.

As mentioned above and according to the invention, the load of the DSP can be significantly decreased as compared with the case in which a phase reference symbol TFPR is used.

While the preferred embodiment of the present invention has been described using specific terms, such description is for illustrative purposes only, and it is to be understood that changes and variations may be made without departing from the spirit or scope of the appended claims.

## Claims

1. A receiving apparatus for receiving a digital broadcast of a signal having a pause period and digital data in every frame, comprising:
a first detector for detecting one of a start point and an end point of said pause period;
a timer having a cycle which is a duration time of said frame; and
a second detector for detecting a difference between a time point at which the detection is made by said first detector and a time indicated by said timer;
wherein an offset of a frame signal indicative of a duration of said digital data is corrected on the basis of an output of said second detector.

2. A receiving apparatus as claimed in claim 1, wherein said digital data is demodulated by an FFT (Fast Fourier Transform) circuit.

3. A receiving apparatus as claimed in claim 1 or 2, wherein said digital broadcast is based on one of DAB (Digital Audio Broadcasting) and a standard based on said DAB and is supplied through a cable.
